# FASCICULE DE BREVET EUROPEEN

(11) **EP 1 114 544 B1**
(45) Date de publication et mention de la délivrance du brevet: **14.06.2006**
(21) Numéro de dépôt: 00953229.2
(22) Date de dépôt: 13.07.2000
(51) Int. Cl.: H04L 29/06

(54) **PROCEDE DE REPARTITION DE LA CHARGE D'UN CANAL**
VERFAHREN ZUR VERTEILUNG DER LAST EINES KANALS
METHOD FOR DISTRIBUTING THE LOAD OF A COMMUNICATION CHANNEL

(30) Priorité: 15.07.1999 FR 9909193
(43) Date de publication de la demande: 11.07.2001
(73) Titulaire: ALCATEL, 75008 Paris (FR)
(72) Inventeur: CLEVY, Laurent, F-28000 Chartres (FR); RUFFIN, Michel, F-75003 Paris (FR); SEDILLOT, Simone, F-78140 Vélizy (FR); KAROUI, Ramzi, F-92260 Fontenay aux Roses (FR)
(74) Mandataire: Lamoureux, Bernard
(86) Numéro de dépôt international: PCT/FR2000/002033
(87) Numéro de publication internationale: WO 2001/006730

(56) Documents cités:
- GB-A- 2 172 471
- US-A- 5 481 738
- US-A- 5 781 598

## Description

Le domaine de l'invention est celui des échanges transactionnels entre des objets fournisseurs de données, des objets consommateurs de ces données, et utilisant des canaux de communication ainsi que des gestionnaires internes ou externes des différentes relations entre ces objets. Le mécanisme est implémenté par un objet intermédiaire qui est le canal de communication.

Les fournisseurs peuvent engorger un canal quand ils transfèrent une trop grande quantité de données ou quand un grand nombre de fournisseurs est connecté au canal.

Un moyen connu de limiter cette surcharge consiste à doter le canal de communication d'un seuil limite d'activité à partir duquel il refuse toute nouvelle transaction tant que les transactions en cours ne sont pas terminées. Cependant, cette solution est trop coûteuse en temps d'exécution. Le moindre dépassement risque de bloquer un canal entier alors que ce dépassement était temporaire. Il est possible d'améliorer cette solution en implémentant un système dynamique de détermination des dépassements qui prenne en compte le contexte de ces dépassements. Cette solution induit nécessairement un perte de temps de réaction du système tout entier.

Une transaction doit satisfaire quatre propriétés regroupées sous l'acronyme ACID signifiant : Atomicité, Cohérence, Isolation et Durabilité. Ces quatre propriétés sont étroitement liées entre elles. Les mécanismes de contrôle de concurrence et de reprise mis en oeuvre par un moteur transactionnel ont pour objectif de les faire respecter.

L'atomicité garantit que, soit l'ensemble des mises à jour d'une transaction est effectué, soit aucune de ces mises à jour n'est effectuée. Le non-respect de cette propriété peut conduire à faire évoluer l'ensemble des données de l'état cohérent initial à un état incohérent.

Afin de faire respecter cette propriété, toute série d'action constituant une transaction est marquée par un début et une fin. Le début d'une transaction signale l'événement de début d'une transaction au moteur transactionnel. Deux ordres sont prévus pour marquer la fin d'une transaction : "commit" permet à la transaction de signaler au moniteur transactionnel que du point isolé de la transaction toutes ses actions se sont bien passé. "Abort" permet à la transaction de signaler au moniteur transactionnel qu'une ou plusieurs de ses actions ont échoué et que la transaction ne souhaite pas être validée (les données modifiées par la transaction doivent êtres remis dans leur état précédent). En fonction de l'événement reçu en fin de transaction par le moniteur transactionnel et en fonction de la vue globale du système qu'il peut avoir (interaction entre transactions) le moniteur transactionnel décide ou non de valider la transaction c'est-à-dire de rendre définitives les modifications apportées par celle-ci Dans le cas où une panne système se produit avant la fin d'une transaction, celle-ci est considérée comme abandonnée. Un des mécanismes possible afin de respecter la propriété d'atomicité consiste à conserver pour chaque transaction en cours l'image précédente de toute donnée mise à jour. En cas d'abandon d'une transaction, il est possible défaire la transaction en appliquant toutes les images précédentes de la transaction.

La propriété de cohérence concerne la cohérence sémantique d'un ensemble de données. Le maintien de celle-ci peut être en partie assuré par les mécanismes assurant le contrôle de contraintes d'intégrité et par le maintien de la propriété des transactions. L'isolation est indispensable en environnement multi-tâches, pour garantir que chaque transaction voit un état cohérent de l'ensemble des données. L'isolation consiste à garantir que si la transaction s'exécute en parallèle avec d'autres transactions (accédant a un ensemble commun de données), il existe une exécution en série des mêmes transactions qui produirait les mêmes changements à l'ensemble des données accédées par les transactions. Dans ce cas, la propriété d'isolation est vérifiée pour cet ensemble de transactions. La durabilité garantit que les mises à jour d'une transaction validée sont définitives. La seule action qui doit permettre de défaire les mises à jour d'une transaction validée est l'exécution d'une transaction de compensation. Cette propriété va de pair avec la propriété d'atomicité stipulant que les mises à jour d'une transaction forment un tout cohérent qui est soit abandonné dans son ensemble, soit validé durablement. Une méthode de réalisation en cas de panne mémoire ou de panne disque entraînant la perte d'une partie des informations de la base de donnée, consiste à disposer d'un mécanisme de reprise pour récupérer les informations perdues.

L'invention a pour but de proposer une solution permettant de réduire la surcharge d'un canal de communication tout en respectant les propriétés ACID de fiabilité et en ne dégradant pas les capacités du système.

Pour réduire la surcharge, on crée un canal jumeau additionnel afin de diriger de une partie des données sur ce nouveau canal.

US-A-5,781,598 révèle une méthode de détecter quand le débit de données sur un canal excède un seuil, initialisant un deuxième canal pour fournir un canal jumeau, et le transmettant à travers le canal jumeau quand la transaction courante sur le canal initial est accomplie.

L'invention consiste en un procédé de répartition de la charge d'un canal de communication dans un échange transactionnel entre deux canaux de communication, respectant les transactions entre les fournisseurs et le canal et les transactions entré le canal et les consommateurs. Ce procédé comporte les étapes suivantes :
- on crée un canal de communication jumeau ;
- on transfère une partie des fournisseurs de données sur le canal jumeau, dès que leurs transactions en cours avec le canal initial sont terminées.

De manière préférentielle, on effectue une étape de détermination des fournisseurs destinés à être transférés sur le canal jumeau. Aucune nouvelle transaction n'est engagée entre lesdits fournisseurs déterminés et le canal initial après l'étape de détermination des fournisseurs.

L'invention concerne également le mécanisme de déconnexion. Il consiste en un procédé de répartition de la charge de deux canaux de communication, respectant les transactions entre les fournisseurs et les canaux et les transactions entre les canaux et les consommateurs, et comporte les étapes suivantes :
- on définit un canal principal et un canal secondaire ;
- on transfère les fournisseurs de données du canal secondaire sur le canal principal dès que leurs transactions en cours avec le canal secondaire sont terminées.

Avantageusement, on déconnecte les consommateurs du canal secondaire toutes les transactions faisant intervenir ledit canal secondaire ont été effectuées.

On peut déterminer le canal secondaire par un seuil de trafic minimal. Dans une variante, on teste préalablement que le canal principal gère un trafic inférieur à un seuil prédéterminé afin de ne pas créer de surcharge sur ce canal.

Afin de garantir la livraison fiable de données entre un fournisseur et un ou plusieurs consommateurs, la propagation de données entre deux objets contigus peut se faire sous le contrôle d'une transaction.

Un fournisseur initie alors une transaction afin d'assurer la fiabilité du transfert avec le canal de communication. Lorsque que la transaction fournisseur canal est terminée correctement, le fournisseur est libéré. Une deuxième transaction est initiée par le canal pour fiabiliser le transfert vers le consommateur. Cette transaction fiabilisant la propagation entre le canal et le consommateur est terminée lorsque que le client a reçu correctement les données.

Quand le canal est surchargé, une copie vide du canal de communication est créée. Cette copie est connectée à l'ensemble des clients connectés au canal d'origine.

On ne bascule un fournisseur vers le nouveau canal que lorsqu'il a terminé ses transactions en cours sur le canal initial.

Un partie des fournisseurs est déconnectée un à un du canal initial afin d'être reconnectés sur le canal jumeau de façon à répartir la charge.

Le fournisseur possède un champ interrogeable permettant d'indiquer s'il peut être déconnecté ou non, c'est-à-dire s'il est en cours de transaction ou non.

Quand la charge décroît, un mécanisme similaire permet de rebasculer les fournisseurs au canal initial et de détruire le canal jumeau devenu inutile.

On attend pour basculer un fournisseur qu'aucune transaction ne soit en cours. On interdit ainsi au fournisseur de nouvelles transactions, afin d'éviter que le fournisseur ne commence indéfiniment de nouvelles transactions. Quand la migration devient possible, la référence du nouveau canal est donnée au fournisseur afin qu'il puisse se connecter. Il peut ensuite commencer de nouvelles transactions sur le canal initial.

Tous les clients sont connectés au nouveau canal avant la migration d'un fournisseur, afin de s'assurer qu'aucune donnée n'est perdue ou transmise plusieurs fois.

L'opération inverse est similaire: tous les fournisseurs doivent être déplacés du canal jumeau vers le canal initial avant que les clients ne soient déconnectés. De plus, il faut attendre que toutes les transactions en cours se terminent avant de migrer un objet.

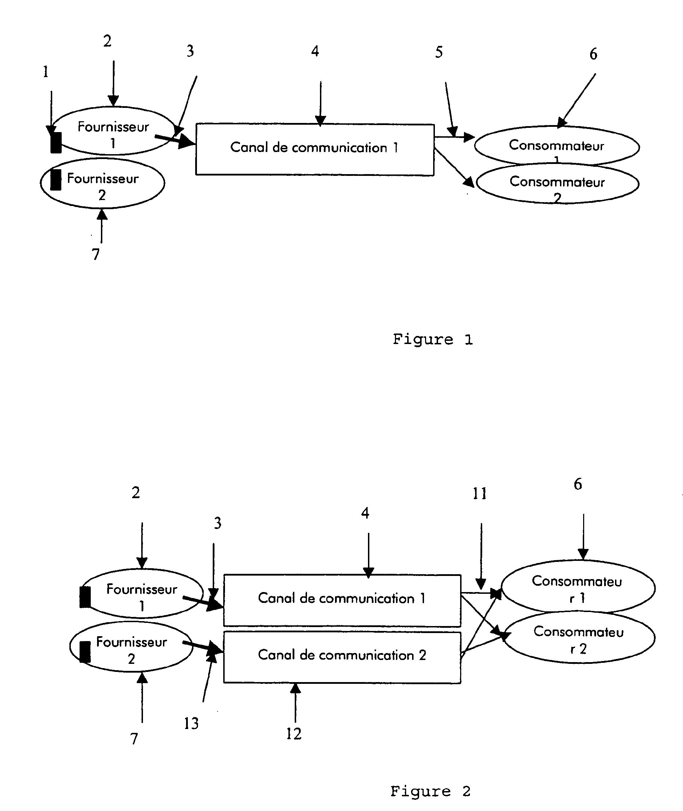

La figure 1 montre le système surchargé, avant la mise en fonctionnement du canal jumeau.

Les fournisseurs (1 et 7) possèdent chacun une interface spécifique (1) que les gestionnaires de communication interrogent afin de savoir si des transactions sont en cours. Le fournisseur (1) effectue une transaction (3) avec le canal de communication (4), alors que le fournisseur (7) n'effectue rien. Celui-ci peut être transféré sur un canal jumeau. Les consommateurs (6) sont en constante communication (5) avec le canal de communication.

La figure 2 montre un canal jumeau établi.

Ce canal jumeau (12) effectue des transactions (13) avec le fournisseur (7). Les consommateurs (6) sont en communication avec tous les canaux de communication (11).

## Revendications

1. Procédé de répartition de la charge d'un canal de communication (4) dans un échange transactionnel entre deux canaux de communication, respectant les transactions entre les fournisseur (2,7) et le canal et les transactions entre le canal et les consommateurs (6), comportant les étapes suivantes :
- on crée un canal de communication jumeau (12);
- on détermine des fournisseurs (7) destinés à être transférés sur ledit canal jumeau
- on transfère une partie des fournisseurs de données sur le canal jumeau, dès que leurs transactions en cours avec le canal initial sont terminées.
**caractérisé en ce qu'**aucune nouvelle transaction n'est engagée entre lesdits fournisseurs déterminés (7) et le canal initial (4) après l'étape de détermination des fournisseurs.

## Claims

1. Method of dividing the load of a communication channel (4) in a transactional exchange between two communication channels respecting transactions between the providers (2, 7) and the channel and transactions between the channel and the consumers (6), the method including the following steps;
- a twin communication channel (12) is created;
- providers (7) to be transferred over said twin channel are determined;
- some of the data providers are transferred over the twin channel as soon as their transactions in progress with the initial channel are terminated,
**characterized in that** no new transaction is undertaken between said determined providers (7) and the initial channel (4) after the provider determination step.

## Patentansprüche

1. Verfahren zur Verteilung der Auslastung eises Komnunikationskanals (4) zum transaktionsorientierten Austausch zwischen zwei Kommunikationskanälen, wobei die Transaktionen zwischen den Lieferanten (2, 7) und dem Kanal sowie die Transaktionen zwischen dem Kanal und den Verbrauchern (6) berücksichtigt werden, bestehend aus folgenden Schritten:
- Einrichtung eines identischen Kommunikationskanals (12);
- Ermittlung der Lieferanten (7) die auf den genannten identischen Kanal umgestellt werden sollen;
- Umstellung eines Teils der Datenlieferanten auf den identischen Kanal, sobald ihre laufenden Transaktionen über den ursprünglichen Kanal abgeschlossen sind;
**dadurch gekennzeichnet, dass** nach dem Schritt zur Ermittlung der Lieferanten keine neue Transaktion zwischen den genannten ermittelten Lieferanten (7) und dem ursprünglichen Kanal (4) eingeleitet wird.
